**Europäisches Patentamt**

**European Patent Office**

**Office européen des brevets**

(11) Veröffentlichungsnummer: **0 199 844 B1**

# EUROPÄISCHE PATENTSCHRIFT

(45) Veröffentlichungstag der Patentschrift: **15.04.92**

(21) Anmeldenummer: **85111676.4**

(22) Anmeldetag: **16.09.85**

(51) Int. Cl.⁵: **C01B 3/50**, **B01D 53/22**, **B01D 59/12**, **B01D 61/00**

(54) **Verfahren und Vorrichtung zur Abtrennung von Wasserstoff aus einem Stoffgemisch, insbesondere einer Gasmischung.**

(30) Priorität: **18.09.84 DE 3434150**

(43) Veröffentlichungstag der Anmeldung:
**05.11.86 Patentblatt 86/45**

(45) Bekanntmachung des Hinweises auf die Patenterteilung:
**15.04.92 Patentblatt 92/16**

(84) Benannte Vertragsstaaten:
**BE CH DE FR GB IT LI SE**

(56) Entgegenhaltungen:
EP-A- 0 012 448          EP-A- 0 012 449
EP-A- 0 090 350          US-A- 3 407 571
US-A- 3 439 474          US-A- 4 031 921

PATENT ABSTRACTS OF JAPAN Band 1, Nr. 12, 22.03.77

(73) Patentinhaber: **Forschungszentrum Jülich GmbH**
**Postfach 1913**
**W-5170 Jülich(DE)**

Patentinhaber: **ONTARIO HYDRO**
**700 University Avenue**
**Toronto Ontario(CA)**

(72) Erfinder: **Shmayda, Walter, Dr.**
**240 Melrose Avenue**
**King City Ontario(CA)**
Erfinder: **Waelbroeck, F., Prof. Dr.**
**Mannheimer Strasse 4**
**W-5170 Jülich(DE)**
Erfinder: **Wienhold, Peter, Dr.**
**Rurallee 7**
**W-5172 Linnich(DE)**
Erfinder: **Winter, Jörg, Dr.**
**Auestrasse 36**
**W-5162 Niederzier(DE)**

(74) Vertreter: **Nöthe, Brigitte, Dr.**
**Bachfeldstrasse 17**
**W-5170 Jülich(DE)**

EP 0 199 844 B1

## Beschreibung

Die Erfindung bezieht sich auf ein Verfahren zur Abtrennung von Wasserstoff(bzw. Wasserstoffisotopen H, D oder T)aus einem Stoffgemisch aus einem primärseitigen Raum 1 durch Diffusion durch eine nichtporöse, selektiv wasserstoffdurchlässige Membran in einen sekundärseitigen Raum 2, der durch die Membran vom Raum 1 getrennt ist, wobei der Wasserstoff im primärseitigen Raum vor dem Kontakt mit der Membran zumindest teilweise dissoziiert wird, sowie auf eine Vorrichtung zur Durchführung des Verfahrens.

Die Erfindung wurde insbesondere für die Abtrennung von Wasserstoff aus einer Gasmischung entwickelt, worauf im Nachfolgenden wesentlich Bezug genommen wird.

Bei einem aus der DE-OS 28 54 638 der Anmelderin bekannten Verfahren der vorstehend genannten Art wird die Effektivität der Wasserstoffabtrennung durch Diffusion außerordentlich stark dadurch erhöht, daß dem Wasserstoff bereits im Gasraum die erforderliche Dissoziationsenergie mitgeteilt wird, so daß er ohne Hemmung in das Membranmaterial eintreten kann und durch dieses in verstärktem Maße permeiert. Eine solche zumindst teilweise Dissoziation des Wasserstoffs im Gasraum kann insbesondere durch Kontakt mit einer > 1300°C heißen Fläche, Gasentladung oder ionisierende Strahlung erreicht werden.

Wasserstoff liegt im Gasraum üblicherweise in Form von $H_2$ vor, die Permeation in nichtporösen (insbesondere metallischen) Wänden erfolgt jedoch in atomarer Form. Der Übergang des Wasserstoffs in das Metall ist daher üblicherweise stark gehemmt und bei Metallen, die Wasserstoff endotherm lösen, praktisch nicht möglich. Nach der US-PS 3 407 571 werden daher solche Materialien, die Wasserstoff endotherm lösen, primärseitig mit einem die Wasserstoffdissoziation katalysierenden Metall, insbesondere mit Palladium oder Palladiumlegierung versehen. Die dadurch erzielbare Verbesserung steht jedoch in keinem Vergleich zu der Effektivität der Verfahrensweise nach der oben genannten DE-OS 28 54 638, die sich nicht nur durch hohe Wasserstoff-Abtrennungsraten auszeichnet, sondern auch dadurch, daß primäseitig sehr geringe Drucke vorliegen können und darüber hinaus eine beachtliche Kompression des Wasserstoffs auf der Sekundärseite erreicht werden kann, da der Wasserstoff sekundärseitig nur in molekularer Form in den Gasraum Übertreten kann und dann an einer Rückkehr zur Primärseite gehindert ist.

Obgleich die durch primärseitige Dissoziation geförderte Wasserstoffpermeation durch nichtporöse Wände erstaunlich effektiv ist, erscheint eine weitere Steigerung der Wasserstoffabtrennung noch wünschenswert.

Aufgabe der Erfindung ist daher eine weitere Intensivierung der Permeation von Wasserstoff durch nichtporöse Wände von der Primärseite zur Sekundärseite.

Dieses Ziel wird erfindungsgemäß dadurch erreicht, daß man eine zumindest zweischichtige Membran mit einem primärseitigen Material A und einem sekundärseiten Material B verwendet, von denen das Material A bei Betriebstemperatur eine geringere löslichkeit für Wasserstoff und eine geringere Freisetzungsratenkonstante hat als das Material B.

Anhand von Permeationsuntersuchungen an Eisenmembranen wurde überraschenderweise festgestellt, daß durch einen primärseitigen Kupferbelag eine Effektivitätssteigerung der Wasserstoffabtrennung erreicht werden kann: Kupfer löst Wasserstoff in geringerem Maße als Eisen und hat ferner eine geringere Freisetzungsratenkonstante. Wenn also Wasserstoffatome mit Hilfe einer primärseitig betriebenen Dissoziationseinrichtung in das Kupfer "hineingetrieben" werden, ergibt sich aufgrund der höheren Löslichkeit des Wasserstoffs im Eisen eine gerichtete Strömung zur Sekundärseite hin: Die durch den dissoziationsgeförderten Eintritt in die Kupferschicht dort in erheblicher Konzentration vorliegenden Wasserstoffatome werden vom Eisen praktisch "extrahiert", das insbesondere bei erhöhter Temperatur Wasserstoff relativ leicht aus dem Metallgitter in den Gasraum wieder freigibt.

Die Wasserstoffdissoziation kann, wie oben angegeben, durch Kontakt mit einer > 1300°C heißen Fläche, Gasentladung wie Glimmentladung und HF-Entladung odgl. oder ionisierende Strahlung erreicht werden. Die Wahl der geeignetsten Dissoziationseinrichtung wird durch die Wasserstoffkonzentration im zuströmenden bzw. Zu trennenden Gas beeinflußt: So wird in einem Gas mit einer sehr niedrigen Wasserstoffkonzentration eine besonders effektive Dissoziationseinrichtung vorgesehen.

Die erfindungsgemäße dissozationsgeförderte Permeation durch eine zumindest Zweischichtmembran wird maßgeblich durch die Quotienten (a) der Wasserstofflöslichkeiten und (b) der Freisetzungsratenkonstanten in den Materialien A und B der Zweischichtmembran bestimmt, die temperaturabhängig sind; (a) nimmt bei dem gewählten Beispiel, Kupfer-Eisen, mit sinkender Temperatur zu. Daneben wird die Beweglichkeit der Wasserstoffatome durch zunehmende Temperatur verbessert und die Wasserstoffabgabe an der Eisenoberfläche bei höherer Temperatur begünstigt, so daß aufgrund der gegenläufigen Effekte ein optimaler Bereich ermittelt werden kann.

Experimentell wurden bei 300° C höhere Abtrennungsraten erzielt als bei 150°C, bei welcher Temperatur eine höhere Kompression erreicht wurde.

Die erfindungsgemäße wasserstoffdurchlässige Membran kann mehr als zwei Schichten aufweisen, solange die oben genannte Bedingung erfüllt ist, so daß das primärseitige Material A eine geringere Löslichkeit und geringere Freisetzungskonstante aufweist als das sekundärseitige Material B, wobei beispielsweise die mechanische Stabilität fördernde Zwischenschichten vorgesehen sein können.

Als Materialien für die primärseitige Schicht A kommen neben dem genannten Kupfer beispielsweise Aluminium, Gold, Platin oder Silber infrage. Sekundärseitig kann Nickel oder Stahl anstelle von Eisen vorgesehen werden. Allgemein bestehen die Materialien A und B vorzugsweise aus Wasserstoff endotherm lösenden Materialien. Selbstverständlich brauchen die Materialien A und B nicht durch unterschiedliche Elemente gebildet zu werden, sondern es können auch unterschiedliche Legierungen vorgesehen sein.

Ggf. vorgesehene weitere Schichten sollen aus Materialien bestehen, die für Wasserstoff permeabel sind, diesen endotherm lösen und deren Löslichkeit L für Wasserstoff nützlicherweise zwischen derjenigen der Materialien A und B liegt.

Die Dicke der Membran insgesamt liegt im üblichen Bereich für Diffusionstrennungen, wobei generell möglichst geringe Wandstärken angestrebt werden, die mit der mechanischen Stabilität verträglich sind.

Da der primärseitigen Schicht aus dem Material A wesentlich die Funktion einer Barriere zukommt, sollte diese Schicht vorzugsweise nur so dick gewählt werden, wie für eine vollständige. Bedeckung der Primärseite der Membran durch dieses Material erforderlich ist. Zweckmäßigerweise werden daher Membranen verwendet, deren primärseitige Schicht aus dem Material A eine Dicke von größenordnungsmäßig Bruchteilen bis einigen $\mu$m hat.

Der erfindungsgemäße Einsatz einer Mehrschichtmembran mit Wasserstofflöslichkeits- und -abgabegefälle zur Primärseite hin, ist nicht nur für die Abtrennung von Wasserstoff aus Gasgemischen unter primärseitiger Dissoziation zweckmäßig, sondern kann auch für eine elektrolytische Wasserstoffabscheidung und Diffusion(mit der Membran als Kathode) eingesetzt werden.

Die durch das Löslickeits- und Freigabegefälle der Membran forcierte dissoziationsgeförderte Permeation spricht bei der Auswahl besonders geringer Membrandicken rasch und empfindlich an und kann daher als empfindliche Wasserstoffsonde eingesetzt werden. Dafür eignet sich eine Membran in Form eines Blindrohres mit außenseitiger Primärseite, der eine Dissozationseinrichtung zugeordnet ist, während der Innenraum des Röhrchens mit einem Wasserstoffanzeiger verbunden wird.

Als besonderer Vorteil der erfindungsgemäßen Membran ist schließlich noch hervorzuheben, daß die Materialwahl von A und B unabhängig von der Oberflächenbeschaffenheit, insbesondere -Kontamination ist. Die Grenzfläche zwischen den Materialien A und B sollte allerdings möglichst rein bzw. frei von Verunreinigungen sein, um eine Wasserstoff-Ansammlung und Übergangshemmung an dieser Stelle zu vermeiden.

Der Arbeitsdruck auf der Primärseite beträgt im allgemeinen maximal einige mbar.
Besonders günstige Ergebnisse werden bei niedrigen Drucken in der Größenordnung von $10^{-3}$ mbar erhalten, wobei der vorzugsweise anzustrebende Arbeitsbereich durch die Permeationszahl W bestimmt wird. Diese wird durch die Gleichung

$$W = \frac{2\sigma k_r}{D} \cdot x_o \cdot c_{eq}$$

gegeben, in der D die Diffusionskonstante, $2\sigma k_r$ die Freisetzungsratenkonstante, $x_o$ die Wandstarke und $c_{eq}$ die Gleichgewichtskonzentration des Wasserstoffs im Metall bedeuten. Obwohl auch im Bereich von Permeationszahlen W > 1 gearbeitet werden kann, werden deutlich günstigere Ergebnisse erhalten wenn, W $\leq$ 1 ist Für die in der Gleichung angegebenen Größen sind in erster Näherung die entsprechenden Daten für das Material B einzusetzen.

Wenn die Dissoziation der Wasserstoffmoleküle durch eine Glimmentladung oder HF-Entladung herbeigeführt wird, kann die Diffusionsmembran selbst als Kathode geschaltet sein. Entladungsleistungen von größenordnungsmäßig 10 bis 100 mW/cm² (Membranfläche) sind für eine brauchbare Arbeitsweise angemessen.

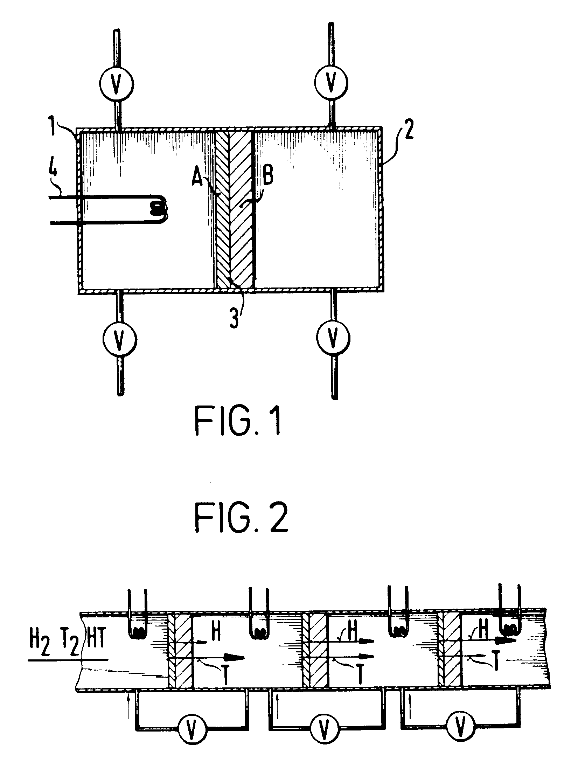

An dem bereits weiter oben erwähnten Versuchssystem mit einer Kupfer-Eisen-Membran wurde festgestellt, daß der Rücktransport von Wasserstoff vom sekundärseitigen Gasraum zum primärseitigen Gasraum im Falle, daß auch im sekundärseitigen Raum eine Einrichtung zur Dissoziation von Wasserstoff vorgesehen wird, deutlich gegenüber dem Transport durch die Membran in Richtung vom Kupfer zum Eisen benachteiligt ist (etwa um den Faktor 2). Es ist daher möglich, eine Serie von Zweischichtmembranen der genannten Art mit Zwischenkammern, in denen jeweils Einrichtungen zur Dissoziation von Wasserstoff vorgesehen sind, für die Trennung von Wasserstoffisotopen zu verwenden. So wird z.B. aus einer Ausgangsmischung von Tritium und Protonium der beweglichere leichte Wasserstoff jeweils zur Sekundärseite hin angereichert, wie durch die beigefügte Figur 2 veranschaulicht wird, bei der die Reinheit des abgetrennten Protiums durch die iterative Teilrückführung verbessert wird. Innerhalb einer solchen Strecke mit einer Serie von Kammern können die aufeinanderfolgenden Membranen jeweils gleich sein oder auch aus unterschiedlichen Materialien bestehen.

Figur 1 zeigt ein Schema für eine Vorrichtung zur Durchführung des erfindungsgemäßen Verfahrens mit einer primärseitigen Kammer 1 und einer sekundärseitigen Kammer 2, die durch eine Zweischichtmembran 3 voneinander getrennt sind.

Durch 4 wird eine Einrichtung zur Dissoziation von Wasserstoff angedeutet.

Die Kammer 1 kann alt der wasserstoffhaltigen Gasmischung gefüllt oder von dieser durchströmt werden und sie hat Üblicherweise mit Ventilen versehene Gasein- und -auslaßstutzen. Die Kammer 2 kann ebenfalls ein oder zwei Anschlüsse haben. Die in der Zeichnung schematisch als Kasten mit Trennwand angedeutete Vorrichtung kann selbstverständlich zweckmäßiger gestaltet sein, beispielsweise in konzentrischer Bauart mit innerer primärseitiger Kammer, wie in der bereits oben erwähnten DE-OS angedeutet ist.

**Patentansprüche**

1.  Verfahren zur Abtrennung von Wasserstoff aus einem Stoffgemisch aus einem primärseitigen Raum 1 durch Diffusion durch eine nichtporöse, selektiv wasserstoffdurchlässige Membran in einen sekundärseitigen Raum 2, der durch die Membran vom Raum 1 getrennt ist, wobei der Wasserstoff im primärseitigen Raum vor dem Kontakt mit der Membran zumindest teilweise dissoziiert wird, **dadurch gekennzeichnet,** daß man eine zumindest zweischichtige Membran mit einem primärseitigen Material A und einem sekundärseitigen Material B verwendet, von denen das Material A bei Betriebstemperatur eine geringere Löslichkeit für Wasserstoff und eine geringere Freisetzungsratenkonstante hat als das Material B.

2.  Verfahren nach Anspruch 1, **dadurch gekennzeichnet,** daß der Wasserstoff aus einer Gasmischung abgetrennt wird.

3.  Verfahren nach Anspruch 1 oder 2, **dadurch gekennzeichnet,** daß man eine Membran verwendet, bei der die primärseitige Schicht aus dem Material A lediglich eine für eine lückenlose Bedeckung ausreichende Schichtdicke aufweist.

4.  Verfahren nach Anspruch 3, **dadurch gekennzeichnet,**

daß die primärseitige Schicht aus dem Material A eine Schichtdicke von Bruchteilen bis einigen $\mu m$ aufweist.

5.  Verfahren nach Anspruch 3 oder 4, **dadurch gekennzeichnet,** daß man eine Zweischichtmembran aus Material B mit primärseitiger dünner Schicht aus Material A verwendet.

6.  Verfahren nach einem der vorangehenden Ansprüche, **dadurch gekennzeichnet,** daß man eine Membran verwendet, bei der die Materialien A und B aus Wasserstoff endotherm lösenden Materialien bestehen.

7.  Verfahren nach einem der vorangehenden Ansprüche, **dadurch gekennzeichnet,** daß man eine Membran aus Eisen mit einem primärseitigen Kupferbelag verwendet.

8.  Verfahren nach einem der vorangehenden Ansprüche, **dadurch gekennzeichnet,** daß primärseitig eine Wasserstoffisotopenmischung und das Trennverfahren für eine primärseitige Abreicherung des leichteren Isotops vorgesehen wird.

9.  Verfahren nach Anspruch 8, **dadurch gekennzeichnet,** daß man eine Abreicherungsstrecke mit einer Folge von mehrschichtigen Membranen verwendet, die jeweils Zwischenkammern begrenzen, in denen jeweils eine zumindest teilweise Dissoziation des Wasserstoffs im Gasraum bewirkt wird.

10.  Vorrichtung zur Abtrennung von Wasserstoff aus einer Gasmischung durch Diffusion durch eine nichtporöse, selektiv wasserstoffdurchlässige Membran mit zwei mit Gasein- und/oder -auslaß versehenen Kammern, die durch die Membran voneinander getrennt werden und mit einer Wasserstoff dissoziierenden Einrichtung in der primärseitigen Kammer, aus der Wasserstoff durch die Membran in die sekundärseitige Kammer diffundiert, **dadurch gekennzeichnet,** daß die Membran durch eine Mehrschichtmembran mit einem primärseitigen Material A und einem sekundärseitigen Material B gebildet wird, von denen das Material A bei Betriebstemperatur eine geringe Löslichkeit für Wasserstoff und eine geringere Freisetzungsratenkonstante hat als das Material B.

**11.** Vorrichtung nach Anspruch 10,
**gekennzeichnet durch**
eine Folge von Kammern, die jeweils durch eine Mehrschichtmembran der genannten Art in gleichsinniger Anordnung voneinander getrennt sind unter Bildung von Zwischenkammern, in denen jeweils eine Wasserstoffdissoziationseinrichtung vorgesehen ist.

**12.** Vorrichtung nach Anspruch 10
**gekennzeichnet durch**
eine blindrohrförmige Ausgestaltung der Membran, deren Innenraum mit einem Wasserstoffanzeigegerät verbunden ist.

**13.** Verwendung der Vorrichtung nach Anspruch 10 zur Kompression von Wasserstoff,
**dadurch gekennzeichnet,**
daß der zu komprimierende Wasserstoff in die primärseitige Kammer (1) eingelassen wird und in der sekundärseitigen Kammer (2) Wasserstoff bis zur Erzielung der gewünschten Drucksteigerung aufgesammelt wird.

## Claims

**1.** A process for the separation of hydrogen from a mixture of substances from a primary-side space 1 by diffusion through a non-porous membrane which is selectively permeable to hydrogen into a secondary-side space 2, which is separated by the membrane from the space 1, wherein the hydrogen in the primary-side space is at least partially dissociated before contact with the membrane, characterised in that at least a two-layer membrane is used with a primary-side material A and a secondary-side material B, of which material A has a lower solubility for hydrogen and a lower rate constant for its liberation at the operating temperature than has material B.

**2.** A process according to Claim 1, characterised in that the hydrogen is separated from a gas mixture.

**3.** A process according to Claims 1 or 2, characterised in that a membrane is used for which the primary-side layer of material A has a layer thickness which is merely sufficient for void-free coverage.

**4.** A process according to Claim 3, characterised in that the primary-side layer of material A has a layer thickness comprising parts up to a few μm.

**5.** A process according to Claims 3 or 4, characterised in that a two-layer membrane is used made of material B with a thinner primary-side layer of material A.

**6.** A process according to any one of the preceding Claims, characterised in that a membrane is used for which materials A and B comprise materials which dissolve hydrogen endothermically.

**7.** A process according to any one of the preceding Claims, characterised in that a membrane of iron with a primary-side coating of copper is used.

**8.** A process according to any one of the preceding Claims, characterised in that a mixture of hydrogen isotopes is provided on the primary side and the separation process is provided for the primary-side depletion of the lighter isotope.

**9.** A process according to Claim 8, characterised in that a depletion section with a series of multilayer membranes is used, which each delimit intermediate chambers, in each of which at least a partial dissociation of the hydrogen is effected in the gas space.

**10.** A device for the separation of hydrogen from a gas mixture by diffusion through a non-porous membrane which is selectively permeable to hydrogen with two chambers provided with gas admission and/or outflow, which chambers are separated from each other by the membrane, and with a device which dissociates hydrogen in the primary-side chamber, from which hydrogen diffuses through the membrane into the secondary-side chamber, characterised in that the membrane is formed from a multilayer membrane with a primary-side material A and a secondary-side material B, of which material A has a lower solubility for hydrogen and a lower rate constant for its liberation at the operating temperature than has material B.

**11.** A device according to Claim 10, characterised by a series of chambers, which are each separated from each other in a uni-directional arrangement by a multilayer membrane of the type stated with the formation of intermediate chambers, in each of which a device for the dissociation of hydrogen is provided.

**12.** A device according to Claim 10, characterised by the membrane being formed as a closed-end tube, the internal space of which is connected to a hydrogen indicator unit.

13. The use of the device according to Claim 10 for the compression of hydrogen, characterised in that the hydrogen to be compressed is admitted to the primary-side chamber (1) and hydrogen is collected in the secondary-side chamber (2) until the desired increase in pressure has been obtained.

**Revendications**

1. Procédé pour séparer de l'hydrogène d'un mélange de substances par diffusion, à travers une membrane non poreuse et perméable sélectivement à l'hydrogène, d'une chambre 1 du côté primaire à une chambre 2 du côté secondaire, qui est séparée de la chambre 1 par la membrane, l'hydrogène de la chambre du côté primaire étant dissocié, au moins partiellement, avant le contact avec la membrane,
caractérisé,
en ce qu'il consiste à utiliser une membrane à au moins deux couches ayant un matériau A du côté primaire et un matériau B du côté secondaire, le matériau A ayant, à la température de fonctionnement, une solubilité pour l'hydrogène plus petite et une constante du taux de libération plus petite que celles du matériau B.

2. Procédé suivant la revendication 1,
caractérisé,
en ce qu'il consiste à séparer l'hydrogène d'un mélange de gaz.

3. Procédé suivant la revendication 1 ou 2,
caractérisé,
en ce qu'il consiste à utiliser une membrane dans laquelle la couche du côté primaire en le matériau A, a une épaisseur suffisant simplement à un recouvrement sans lacune.

4. Procédé suivant la revendication 3,
caractérisé,
en ce que la couche du côté primaire en le matériau A, a une épaisseur de quelques fractions de μm à quelques μm.

5. Procédé suivant la revendication 3 ou 4,
caractérisé,
en ce qu'il consiste à utiliser une membrane à deux couches en le matériau B ayant, du côté primaire, une mince couche du matériau A.

6. Procédé suivant l'une des revendications précédentes,
caractérisé,
en ce qu'il consiste à utiliser une membrane dans laquelle les matériaux A et B sont en matériau dissolvant l'hydrogène de manière endothermique.

7. Procédé suivant l'une des revendications précédentes,
caractérisé,
en ce qu'il consiste à utiliser une membrane en fer ayant un revêtement, du côté primaire, en cuivre.

8. Procédé suivant l'une des revendications précédentes,
caractérisé,
en ce qu'il est prévu, du côté primaire, un mélange d'isotopes de l'hydrogène et le procédé de séparation est prévu pour un appauvrissement du côté primaire en l'isotope le plus léger.

9. Procédé suivant la revendication 8,
caractérisé,
en ce qu'il consiste à utiliser une zone d'appauvrissement ayant une succession de membranes à couches multiples, qui délimitent chacune des chambres intermédiaires dans chacune desquelles a lieu une dissociation, au moins partielle, de l'hydrogène dans l'espace réservé au gaz.

10. Dispositif pour séparer de l'hydrogène d'un mélange de gaz, par diffusion à travers une membrane non poreuse et perméable sélectivement à l'hydrogène, comprenant deux chambres munies d'entrée et/ou de sortie pour les gaz et séparées l'une de l'autre par la membrane, et un dispositif de dissociation de l'hydrogène dans la chambre du côté primaire, de laquelle de l'hydrogène diffuse, à travers la membrane, dans la chambre du côté secondaire,
caractérisé,
en ce que la membrane est formée d'une membrane à couches multiples ayant un matériau A, du côté primaire, et un matériau B, du côté secondaire, le matériau A ayant, à la température de fonctionnement, une solubilité pour l'hydrogène plus petite et une constante de vitesse de libération plus petite que celles du matériau B.

11. Dispositif suivant la revendication 10,
caractérisé,
par une succession de chambres qui sont séparées respectivement les unes des autres par une membrane à couches multiples, du type mentionné, suivant un agencement de même sens, avec formation de chambres intermédiaires dans chacune desquelles est prévu un dispositif de dissociation de l'hydrogène.

12. Dispositif suivant la revendication 10, caractérisé,

par une conformation en tube borgne de la membrane, dont l'intérieur communique avec un appareil indicateur de la présence d'hydrogène.

13. Utilisation du dispositif suivant la revendication 10, pour la compression de l'hydrogène, caractérisé,

en ce qu'il consiste à admettre l'hydrogène à comprimer dans la chambre (1) du côté primaire et à recueillir de l'hydrogène dans la chambre (2) du côté secondaire, jusqu'à obtention de l'augmentation de pression souhai-tée.

FIG. 1

FIG. 2